# EUROPÄISCHE PATENTSCHRIFT

(11) **EP 0 901 439 B1**
(45) Veröffentlichungstag und Bekanntmachung des Hinweises auf die Patenterteilung: **24.10.2001**
(21) Anmeldenummer: 97927069.1
(22) Anmeldetag: 28.05.1997
(51) Int. Cl.: B60T 13/14, F15B 1/04

(54) **DRUCKSPEICHER FÜR FAHRZEUGBREMSANLAGE**
PRESSURE ACCUMULATOR FOR VEHICLE BRAKE SYSTEM
ACCUMULATEUR DE PRESSION POUR SYSTEME DE FREINAGE DE VEHICULE

(30) Priorität: 30.05.1996 DE 19621786
(43) Veröffentlichungstag der Anmeldung: 17.03.1999
(60) Teilanmeldung: 98115263.0
(73) Patentinhaber: Lucas Industries Limited, London W1Y 4DJ (GB)
(72) Erfinder: MOHR, Kurt, D-56283 Halsenbach (DE); WÖRSDÖRFER, Karl-Friedrich, D-55257 Budenheim (DE); POERTZGEN, Gregor, D-56068 Koblenz (DE)
(74) Vertreter: Schmidt, Steffen J., Dipl.-Ing.
(86) Internationale Anmeldenummer: EP9702782
(87) Internationale Veröffentlichungsnummer: WO9745306

(56) Entgegenhaltungen:
- EP-A- 0 391 320
- DE-A- 3 900 899
- DE-A- 3 901 261
- US-A- 4 880 147

## Beschreibung

Die vorliegende Erfindung betrifft eine elektronisch steuerbare Fahrzeugbremsanlage für ein Kraftfahrzeug mit einer Bremsfluid bereitstellenden Zylinder/Kolbenanordnung, die durch Betätigen eines Bremspedals veranlaBt wird, auf eine Bremse des Kraftfahrzeuges wirkendes Bremsfluid bereitzustellen, wobei die Zylinder/ Kolbenanordnung mit einer Pumpenanordnung und einem Druckspeicher verbindbar ist, wobei der Druckspeicher ein Gehäuse hat, das einen Fluidanschluß für in das Gehäuse ein- oder ausströmendes Fluid sowie eine Federanordnung aufweist, gegen deren Kraft durch den Fluid-anschluß einströmendes Bremsfluid arbeitet, dadurch gekennzeichnet, daß zumindest ein Teil der Federanordnung durch wenigstens einen Teil der Gehäusewandung gebildet ist.

Überdies betrifft die Erfindung einen Druckspeicher insbesondere für eine derartige elektronische steuerbare Fahrzeugbremsanlage mit einem Gehäuse, einem Fluidanschluß für in das Gehäuse ein- oder ausströmendes Fluid, sowie eine Federanordnung, gegen deren Kraft durch den Fluidanschluß einströmendes Bremsfluid arbeitet.

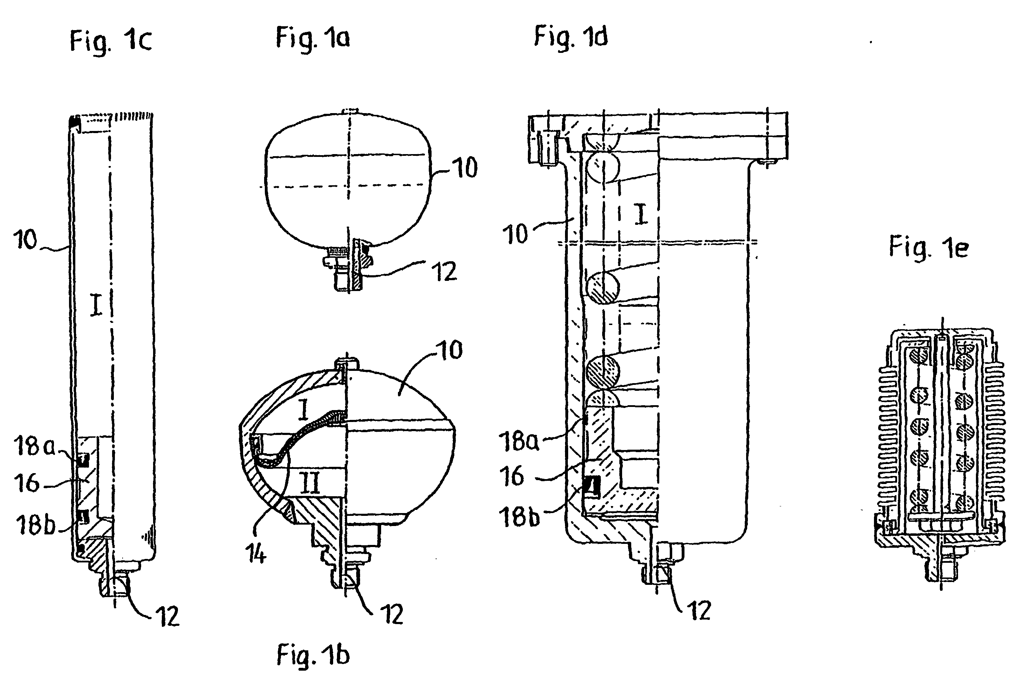

Im Stand der Technik sind Druckspeicher bekannt, die als Gaskolbenspeicher, als Gasmembranspeicher oder als Gas-Multilayer-Membranspeicher, oder als Federkolbenspeicher ausgestaltet sind. In den Fig. 1a, 1b, 1c und 1d sind jeweils schematisch derartige Druckspeicher veranschaulicht. Dabei ist in den Fig. 1a bis 1d gezeigten Varianten das Nutzvolumen bei 20 °C gleich. Ersichtlich schwankt die jeweilige Baugröße erheblich. Darüber hinaus bestehen für Druckspeicher mit Gasfüllung Probleme hinsichtlich der Temperaturabhängigkeit und der Dichtigkeit im Langzeitverhalten. Weitere Nachteile sind bei Gas-Multilayer-Membranspeichern das erhebliche Gewicht und die hohen Kosten. Bei Federkolbenspeichern besteht das Problem der Abnutzung der Dichtung zwischen dem Zylinder und dem Kolben.

Der Erfindung liegt die Aufgabe zugrunde, insbesondere für die eingangs genannte Fahrzeugbremsanlage einen Druckspeicher bereitzustellen, der diese Nachteile nicht aufweist.

Zur Lösung dieser Aufgabe ist zumindest ein Teil der Federanordnung durch wenigstens einen Teil der Gehäusewandung gebildet.

Auf diese Weise wird zum einen eine erhebliche Gewichtseinsparung erreicht. Andererseits ermöglicht die Integration zweier Funktionen (Speicherung potentieller Energie und Umschließung des Fluides) in einem Bauteil eine erhebliche Vereinfachung der Gesamtanordnung. Darüber hinaus werden Dichtungen vermieden, die aufgrund von Reibung verschleißen können.

Vorzugsweise ist der einen Teil der Gehäusewandung bildende Teil der Federanordnung zumindest abschnittsweise durch einen Faltenbalg, vorzugsweise aus Metall, gebildet.

Um ein möglichst hohes Druckniveau zu erreichen, wirkt parallel zu der durch einen Teil der Gehäusewandung gebildeten Federanordnung ein weiterer Teil der Federanordnung, der vorzugsweise im Inneren des Gehäuses angeordnet ist. Dieser weitere Teil der Federanordnung kann als Schrauben-, Elastomer- oder Spiralfeder oder als Tellerfederpaket ausgebildet sein. Es besteht jedoch auch die Möglichkeit, den weiteren Teil der Federanordnung außerhalb des Gehäuses, beispielsweise das Gehäuse umgebend, anzuordnen.

Der weitere Teil der Federanordnung wird bevorzugt durch ein Federelement gebildet, das zwei starre Wandabschnitte des Gehäuses aufeinanderzuzieht. Dazu ist vorzugsweise das Federelement als Druckfeder ausgebildet. Es ist jedoch auch möglich, das Federelement als Zugfeder auszubilden. Wenn das Federelement als Druckfeder ausgebildet ist, ist es bevorzugt zwischen einer ersten Gehäusewand und einer Zwischenwand eingespannt, die mit einer zweiten Gehäusewand verbunden ist. Dabei stützt das Federelement sich an der ersten Gehäusewand über einen in seiner effektiven Länge verstellbaren Bolzen ab, der die Zwischenwand durchragt. Die Zwischenwand ist dabei Teil einer Hülse, die mit der zweiten Gehäusewand verbunden ist.

Weitere Vorteile, Eigenschaften und mögliche Abwandlungen werden anhand der nachstehenden Figurenbeschreibung deutlich.
- Fig. 1a - 1d: zeigen unterschiedliche Druckspeichervarianten gemäß dem Stand der Technik.
- Fig. 1e: zeigt eine Ausführungsform des erfindungsgemäßen Druckspeichers in maßstäblichem Größenvergleich zu den bekannten Anordnungen gemäß Fig. 1a - 1d.
- Fig. 2: zeigt einen erfindungsgemäßen Druckspeicher in vergrößerter schematischer Darstellung.

Fig. 1a zeigt einen Gasspeicher mit einem Gehäuse 10, das durch eine (nicht gezeigte) bewegliche Membran in zwei Räume geteilt ist. Ein erster vollständig umschlossener Raum I enthält unter Druck stehendes Gas. Ein zweiter Raum II ist durch einen Fluidanschluß mit unter Druck stehendem Fluid beaufschlagbar. Sobald der Druck des an dem Fluidanschluß 12 anstehenden Fluides höher ist als der Gasdruck in dem ersten, vollständig umschlossenen Raum I, wird die Membran verschoben, so daß sich dieser erste Raum I verringert und das Fluid in den zweiten Raum II eindringt.

Fig. 1b zeigt einen bekannten Druckspeicher, bei dem die Membran als Multilayer-Membrane 14 ausgestaltet ist. Allerdings ist diese Multilayer-Membran sehr teuer. Dennoch kann sie die Lebensdauer der Anordnung gegenüber einer Anordnung mit einfacher Membran allenfalls verdoppeln.

Die Probleme hinsichtlich der Temperaturabhängigkeit werden dabei nicht gelöst.

Fig. 1c zeigt einen Gaskolbenspeicher, bei dem in einem Zylinder, der gleichzeitig die Gehäusewand 10 bildet, ein Kolben 16 axial verschiebbar angeordnet ist. In gleicher Weise wie die Membran 14 verschließt der Kolben 16 einen mit unter Druck stehenden gasgefüllten Raum I. Die Problematik dieser Anordnung besteht darin, daß die Dichtungen 18a, 18b im Dauerbetrieb der Gefahr des Verschleißes und der Alterung unterliegen. Darüber hinaus besteht auch hier das Problem der Temperaturabhängigkeit aufgrund der Gasfüllung des ersten Raumes I.

Fig. 1d zeigt einen Pederkolbenspeicher, bei dem anstelle der Gasfüllung im ersten Raum I eine Schraubenfeder 20 angeordnet ist, die auf dem Kolben 16 lastet. Damit ist zwar das Problem der Temperaturabhängigkeit gelöst. Allerdings besteht nach wie vor das Problem der Alterung und des Verschleißes der Dichtungen 18a, 18b.

Außerdem zeigen die Zeichnungen deutlich den erheblichen Raumbedarf beispielsweise des Federkolbens gemäß Fig. 1d im Vergleich zu dem Gasspeicher gemäß Fig. 1a.

Erstaunlicherweise ist es möglich durch die erfindungsgemäße Ausgestaltung einen Raumbedarf zu erreichen, der nur unwesentlich über dem Raumbedarf des Gasdruckspeichers gemäß Fig. 1a liegt, wobei jeweils gleiches Speichervolumen für Bremsfluid vorausgesetzt wird. Dies wird durch den maßstäblichen Größenvergleich zwischen den Fig. 1a bis 1d einerseits und Fig. 1e (erfindungsgemäßer Druckspeicher) andererseits anschaulicht.

Dennoch ist der erfindungsgemäße Druckspeicher nicht (oder) kaum temperaturabhängig und hat aufgrund fehlender bewegter Dichtungen keine Verschleißprobleme

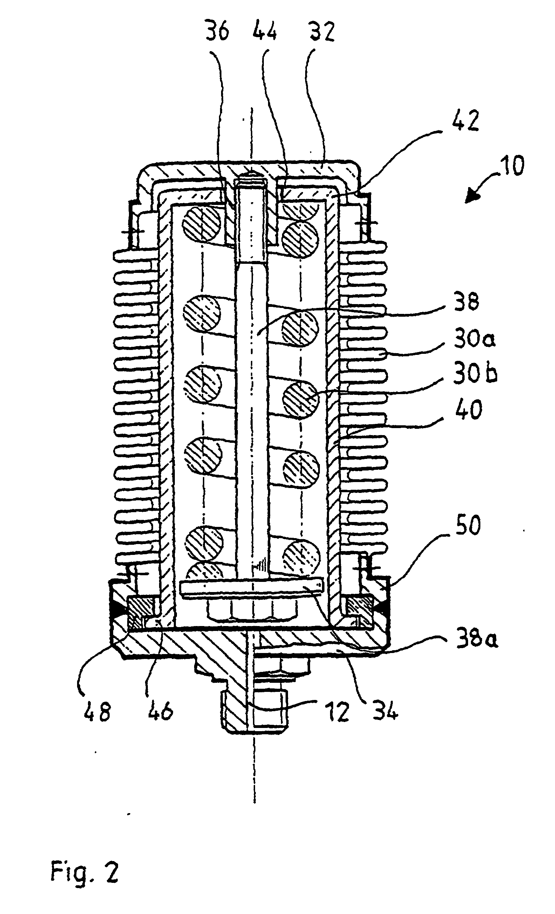

Fig. 2 zeigt eine Ausführungsform eines erfindungsgemäßen Druckspeichers mit einem Gehäuse 10, einem Fluidanschluß 12 für in das Gehäuse 10 ein- oder ausströmendes Fluid sowie einer Federanordnung 30a, 30b, gegen deren Kraft durch den Fluidanschluß einströmendes Bremsfluid arbeitet. Dabei ist ein Teil der Federanordnung 30a, 30b durch einen Teil der Gehäusewandung des Gehäuses 10 gebildet. Dieser, einen Teil der Gehäusewandung bildende Teil der Federanordnung 30a ist durch einen Metallfaltenbalg gebildet. Dazu wirkungsmäßig parallel geschaltet ist im Inneren des Gehäuses ein weiterer Teil der Federanordnung, nämlich die Schraubenfeder 30b vorgesehen.

Das Gehäuse 10 weist zwei starre Wandabschnitte 32, 34 auf, die im gezeigten Ausführungsbeispiel die Stirnseiten des zylindrischen Paltenbalges verschließen. Dabei ist in dem einen Wandabschnitt 34 der Fluidanschluß 12 vorgesehen.

Die beiden Wandabschnitte 32, 34 sind mit den beiden Enden des Metallfaltenbalges 30a fest und druckdicht verbunden, so daß sich ein insgesamt abgeschlossener Raum ergibt. Die erste starre Gehäusewand 32 weist an ihrer Innenseite einen Gewindeflansch 36 auf, in den ein Schraubbolzen 38 eingeschraubt ist. An der zweiten Gehäusewand stützt sich eine rohrförmige Hülse 40 ab, deren axiale Länge so bemessen ist, daß sie den gesamten Raum zwischen der ersten und der zweiten Gehäusewand 32, 34 im wesentlichen überdeckt. An ihrer der ersten Gehäusewand 32 zugewandten Seite weist die Hülse 40 einen als Zwischenwand 42 wirkenden Deckel auf, durch den der Gewindeflansch 26 unter Bildung eines Ringspaltes 44 ragt. Zwischen der Zwischenwand 42 und einem Kopf 38a des Schraubenbolzens 38 ist das Federelement 30b als Druckfeder unter Vorspannung aufgenommen. Durch den Schraubenbolzen 38 kann die Vorspannung des Federelementes 30 eingestellt werden.

Die Hülse 40 weist an ihrer der zweiten Gehäusewand 34 zugewandten Seite einen nach außen gewandten Ringbund 46 auf, der über einen Haltering 48 in dem umlaufenden Rand 50 des zweiten Gehäusedeckels 34 aufgenommen ist.

Zur Montage wird in eine vormontierte Einheit bestehend aus der ersten Gehäusewand 32 und dem Faltenbalg 30a die Hülse 40 (mit dem Haltering 48) eingeschoben und die Feder 30b eingesetzt. Mittels des Schraubenbolzens 38 wird die Feder 30b gegen die Zwischenwand 32 gepreßt. Anschließend wird der zweite Gehäusedeckel 34 mit dem Randelement 50 verschweißt, so daß diese eine feste und druckbelastbare Verbindung eingehen.

## Patentansprüche

1. Elektronisch steuerbare Fahrzeugbremsanlage für ein Kraftfahrzeug mit einer Bremsfluid bereitstellenden Zylinder/Kolbenanordnung, die durch Betätigen eines Bremspedals veranlaßt wird, auf eine Bremse des Kraftfahrzeuges wirkendes Bremsfluid bereitzustellen, wobei die Zylinder/ Kolbenanordnung mit einer Pumpenanordnung und einem Druckspeicher verbindbar ist, wobei der Druckspeicher ein Gehäuse (10) hat, das einen Fluidanschluß (12) für in das Gehäuse (10) ein- oder ausströmendes Fluid sowie eine Federanordnung (30a, 30b) aufweist, gegen deren Kraft durch den Fluidanschluß (12) einströmendes Bremsfluid arbeitet, **dadurch gekennzeichnet, daß** zumindest ein Teil der Federanordnung (30a, 30b) durch wenigstens einen Teil (30a) der Gehäusewandung gebildet ist.

2. Druckspeicher, insbesondere für eine elektronisch steuerbare Fahrzeugbremsanlage, mit
- einem Gehäuse (10),
- einem Fluidanschluß (12) für in das Gehäuse (10) ein- oder ausströmendes Fluid, sowie
- eine Federanordnung (30a, 30b), gegen deren Kraft durch den Fluidanschluß einströmendes Bremsfluid arbeitet, **dadurch gekennzeichnet, daß** zumindest ein Teil der Federanordnung durch wenigstens einen Teil der Gehäusewandung (30a) gebildet ist.

3. Druckspeicher, nach Anspruch 2, **dadurch gekennzeichnet, daß**
- der einen Teil der Gehäusewandung (30a) bildende Teil der Federanordnung zumindest abschnittsweise durch einen Faltenbalg, vorzugsweise aus Metall gebildet ist.

4. Druckspeicher, nach einem der Ansprüche 2 oder 3, **dadurch gekennzeichnet, daß**
- parallel zu der durch einen Teil der Gehäusewandung (30a) gebildeten Federanordnung ein weiterer Teil der Federanordnung (30a) wirkt, der vorzugsweise im Innern des Gehäuses (10) angeordnet ist.

5. Druckspeicher, nach Anspruch 4, **dadurch gekennzeichnet, daß**
- der weitere Teil der Federanordnung (30b) durch ein Federelement gebildet ist, das zwei starre Wandabschnitte (32, 34) des Gehäuses (10) aufeinander zu zieht.

6. Druckspeicher, nach Anspruch 5, **dadurch gekennzeichnet, daß**
- das Federelement als Druckfeder ausgebildet ist.

7. Druckspeicher, nach Anspruch 5, **dadurch gekennzeichnet, daß**
- das Federelement als Zugfeder ausgebildet ist.

8. Druckspeicher, nach Anspruch 6, **dadurch gekennzeichnet, daß**
- das Federelement (30b) zwischen einer ersten Gehäusewand (32) und einer Zwischenwand (42) eingespannt ist, die mit einer zweiten Gehäusewand (34) verbunden ist.

9. Druckspeicher, nach Anspruch 8, **dadurch gekennzeichnet, daß**
- das Federelement (30b) sich an der ersten Gehäusewand (32) über einen in seiner effektiven Länge verstellbaren Bolzen (38) abstützt, der die Zwischenwand (42) unter Bildung eines Ringspaltes (44) durchragt.

10. Druckspeicher, nach Anspruch 8, **dadurch gekennzeichnet, daß**
- die Zwischenwand (42) Teil einer Hülse (40) ist, die mit der zweiten Gehäusewand (34) verbunden ist.

## Claims

1. An electronically controllable vehicle braking system for a motor vehicle with a cylinder/piston arrangement providing brake fluid, which, by actuating a brake pedal, is caused to provide brake fluid acting on a brake of the motor vehicle, with the cylinder/piston arrangement being connectable with a pump arrangement and a pressure accumulator with the pressure accumulator having a housing (10) which comprises a fluid connection (12) for a fluid flowing into and out of the housing (10) as well as a spring arrangement (30a, 30b) against whose force brake fluid flowing through the fluid connection (12) acts, **characterised in that** at least one part of the spring arrangement (30a, 30b) is formed by at least one part (30a) of the housing wall.

2. A pressure accumulator, in particular for an electronically controllabe vehicle braking system, comprising
- a housing (10);
- a fluid connection (12) for fluid flowing into and out of the housing (10); as well as
- a spring arrangement (30a, 30b) against whose force brake fluid flowing in through the fluid connection acts, **characterised in that** at least one part of the spring arrangement is formed by at least one part of the housing wall (30a).

3. The pressure accumulator according to Claim 2, **characterised in that**
- the part of the spring arrangement which forms a part of the housing wall (30a) is at least sectionally formed by bellows, preferably consisting of metal.

4. The pressure accumulator according to one of Claims 2 or 3, **characterised in that**
- a further part of the spring arrangement (30a) acts parallel to the spring arrangement which is formed by a part of the housing wall, which is preferably arranged inside the housing (10).

5. The pressure accumulator according to Claim 4, **characterised in that**
- the further part of the spring arrangement (30b) is formed by a spring element which pulls two rigid wall sections (32, 34) of the housing (10) towards each other.

6. The pressure accumulator according to Claim 5, **characterised in that**
- the spring element is designed as a compression spring.

7. The pressure accumulator according to Claim 5, **characterised in that**
- the spring element is designed as a tension spring.

8. The pressure accumulator according to Claim 6, **characterised in that**
- the spring element (30b) is clamped between a first housing wall (32) and an intermediate wall (42) which is connected with a second housing wall (34).

9. The pressure accumulator according to Claim 8, **characterised in that**
- the spring element (30b) bears against the first housing wall (32) via a bolt (38) whose effective length is adjustable and which protrudes through the intermediate wall (42) by forming an annular gap (44).

10. The pressure accumulator according to Claim 8, **characterised in that**
- the intermediate wall (42) is part of a sleeve (40) which is connected with the second housing wall (34).

## Revendications

1. Système de freinage de véhicule pouvant être commandé électroniquement pour un véhicule automobile comprenant un dispositif à cylindre et piston fournissant du fluide de freinage, qui est amené par actionnement d'une pédale de frein à fournir du fluide de freinage agissant sur un frein du véhicule automobile, le dispositif à cylindre et piston pouvant être mis en communication avec un moyen de pompe et un accumulateur de pression, l'accumulateur de pression possédant un logement (10) qui présente un raccordement de fluide (12) pour le fluide arrivant dans le ou sortant hors du logement (10) ainsi qu'un dispositif élastique (-30a, 30b) contre la force duquel travaille le fluide de freinage arrivant par le raccordement de fluide (12), **caractérisé en ce qu'**au moins une partie du dispositif élastique (30a, 30b) est formée par au moins une partie (30a) de la paroi de logement.

2. Accumulateur de pression, en particulier pour un système de freinage de véhicule pouvant être commandé électroniquement, comprenant
- un logement (10),
- un raccordement de fluide (12) pour le fluide arrivant dans le ou sortant hors du logement (10), ainsi que
- un dispositif élastique (30a, 30b), contre la force duquel travaille le fluide de freinage arrivant par le raccordement de fluide, **caractérisé en ce qu'**au moins une partie du dispositif élastique est formée par au moins une partie de la paroi de logement (30a).

3. Accumulateur de pression selon la revendication 2, **caractérisé en ce que**
- la partie du dispositif élastique formant une partie de la paroi de logement (30a) est formée au moins par portions d'un soufflet de préférence en métal.

4. Accumulateur de pression selon l'une des revendications 2 ou 3, **caractérisé en ce que**
- une autre partie du dispositif élastique (30a) qui est disposée de préférence à l'intérieur du logement (10) agit parallèlement au dispositif élastique formé par une partie de la paroi de logement (30a).

5. Accumulateur de pression, la revendication 4, **caractérisé en ce que**
- l'autre partie du dispositif élastique (30b) est formée par un élément élastique qui tire l'une vers l'autre deux portions de paroi rigides (32, 34) du logement (10).

6. Accumulateur de pression selon la revendication 5, **caractérisé en ce que**
- l'élément élastique est un ressort de compression.

7. Accumulateur de pression selon la revendication 5, **caractérisé en ce que**
- l'élément élastique est un ressort de traction.

8. Accumulateur de pression selon la revendication 6, **caractérisé en ce que**
- l'élément élastique (30b) est contraint entre une première paroi de logement (32) et une paroi intermédiaire (42) qui est reliée à une deuxième paroi de logement (34).

9. Accumulateur de pression selon la revendication 8, **caractérisé en ce que**
- l'élément élastique (30b) s'appuie contre la première paroi de logement (32) par l'intermédiaire d'un boulon (38) dont la longueur effective est réglable et qui traverse la paroi intermédiaire (42) en formant une fente annulaire (44).

10. Accumulateur de pression selon la revendication 8, **caractérisé en ce que**
- la paroi intermédiaire (42) est une partie d'un manchon (40) qui est relié à la deuxième paroi de logement (34).
